**Europäisches Patentamt**

**European Patent Office**

**Office européen des brevets**

(19)

(11) Numéro de publication : **0 517 592 A1**

# (12) DEMANDE DE BREVET EUROPEEN

(21) Numéro de dépôt : **92401528.2**

(22) Date de dépôt : **04.06.92**

(51) Int. Cl.$^5$ : **G01L 25/00**

(30) Priorité : **07.06.91 FR 9106971**

(43) Date de publication de la demande :
**09.12.92 Bulletin 92/50**

(84) Etats contractants désignés :
**CH DE GB LI SE**

(71) Demandeur : **TECHNOMESURE**
**141 rue Rateau**
**F-93120 La Courneuve (FR)**

(72) Inventeur : **O'Mahony, Gérard**
**95 rue de Versailles**
**F-92410 Ville d'Avray (FR)**

(74) Mandataire : **Thévenet, Jean-Bruno et al**
**Cabinet BEAU DE LOMENIE 55 rue**
**d'Amsterdam**
**F-75008 Paris (FR)**

(54) **Procédé et dispositif d'étalonnage de couplemètre et couplemètre compact adapté au dispositif.**

(57) Le dispositif d'étalonnage de couplemètres (100) munis d'un arbre torsible creux (101) et d'un capteur de torsion (102), comprend un arbre d'entraînement (20) qui pénètre à l'intérieur de l'arbre torsible creux (101) et est entraîné par un moteur de faible puissance.

L'arbre d'entraînement (20) est muni d'un actionneur hydraulique (30) alimenté en fluide hydraulique à une pression statique contrôlée Ps. L'actionneur (30) est constitué d'une première partie (31) comprenant au moins un cylindre (53) solidaire en rotation d'une première extrémité (111) de l'arbre torsible (101) et d'une deuxième partie (32) munie d'au moins un piston (54) solidaire en rotation d'une deuxième extrémité (112) de l'arbre torsible (101).

fig_1

EP 0 517 592 A1

La présente invention est relative aux procédés et dispositifs de mesure de couple et concerne plus particulièrement un banc d'étalonnage de couplemètres destinés principalement à des machines de grande puissance.

Un couplemètre est constitué essentiellement d'un arbre torsible et d'un capteur mesurant la torsion (torsiomètre) dudit arbre sous l'effet d'un couple.

L'étalonnage du couplemètre a pour objectif de relever, au laboratoire, la courbe réelle du signal de sortie Us du capteur en fonction du couple C appliqué sur l'arbre torsible, et de mesurer l'incidence sur cette courbe de différents paramètres tels que la vitesse de rotation de l'arbre N ou la température. Bien entendu, la qualité du couplemètre sera d'autant plus grande que le rapport C/Us sera constant dans toute la plage de fonctionnement (linéarité) et indépendant de tous les autres paramètres (vitesse, température, etc...). Un banc d'étalonnage de couplemètre doit donc permettre de relever cette courbe Us(C) dans toutes les conditions d'exploitation, et plus particulièrement en fonction de la vitesse de rotation N.

Il est connu de réaliser directement l'étalonnage des couplemètres par le relevé en grandeur réelle du couple C auquel est soumis l'arbre tournant à la vitesse de rotation N. Toutefois, il apparait rapidement qu'un tel relevé nécessite des moyens considérables dont seuls certains grands laboratoires ou centres d'essais disposent, lorsque la puissance mise en jeu P, égale au produit du couple C par la vitesse de rotation N, devient importante. Il en est ainsi lorsque les couplemètres sont destinés à des turbines aéronautiques ou marines, à des turbines d'accélérations de gazoducs ou oléoducs, à des moteurs Diesel, etc.

Il est également connu de recourir à un étalonnage indirect par une première mesure, à l'arrêt, de l'angle de torsion de l'arbre torsible en fonction du couple C appliqué sur l'arbre torsible. Une seconde mesure du signal de sortie Us du capteur en fonction d'un décalage électrique équivalent à l'angle $\gamma$, mesuré entre les capteurs situés aux extrémités de l'arbre torsible, est alors effectuée. Les deux courbes C = f($\gamma$) et Us = f($\gamma$) permettent alors de retrouver la courbe du signal de sortie Us en fonction du couple C. Toutefois, ces deux mesures entraînent un cumul des erreurs réduisant la précision d'un tel dispositif et donc également celle du couplemètre à étalonner. En outre, l'angle de torsion étant toujours très faible, les difficultés résultant de sa mesure s'avèrent importantes. De plus, ce type d'étalonnage ne permet pas de prendre en compte l'influence de la vitesse de rotation de l'arbre torsible.

Il est aussi connu d'associer au couplemètre à étalonner un ensemble, générateur de courant et moteurrécepteur, entraîné par un moteur d'entraînement. Toutefois, l'encombrement de l'ensemble est tel que son utilisation, dans le cas de machines de grande puissance, s'avère économiquement non rentable.

La présente invention vise précisément à remédier aux inconvénients précités et à permettre un étalonnage de couplemètres sans consommation excessive d'énergie et sans nécessiter un appareillage de grande dimension tout en possédant, du fait de la mesure directe, une très bonne précision et en permettant un étalonnage pour différentes vitesses de rotation.

Ces buts sont atteints grâce à un dispositif d'étalonnage de couplemètres munis d'un arbre torsible creux et d'un capteur de torsion, caractérisé en ce qu'il comprend un arbre d'entraînement pénétrant à l'intérieur de l'arbre torsible creux et en ce que l'arbre d'entraînement est muni d'un actionneur hydraulique dont une première partie comprenant au moins un cylindre est solidaire en rotation d'une première extrémité de l'arbre torsible et une deuxième partie munie d'au moins un piston est solidaire en rotation d'une deuxième extrémité de l'arbre torsible.

Le dispositif d'étalonnage comprend des moyens de faible puissance d'entraînement en rotation, à une vitesse contrôlée N, de l'arbre d'entraînement qui entraîne lui-même en rotation l'actionneur hydraulique et l'arbre torsible creux, les moyens d'entraînement en rotation ne servant qu'à vaincre les pertes d'énergie parasites dues notamment aux frottements.

Le dispositif d'étalonnage comprend de façon plus particulière des moyens d'alimentation en fluide hydraulique, à une pression statique contrôlée $P_S$, de l'actionneur hydraulique, qui comprennent un orifice d'entrée situé à une extrémité de l'arbre d'entraînement, un joint tournant disposé au voisinage dudit orifice d'entrée pour assurer une étanchéité entre ledit orifice et l'arbre d'entraînement, et des canalisations tournantes d'alimentation des cylindres de l'actionneur hydraulique ménagées dans ladite première partie.

Avantageusement, l'actionneur hydraulique comprend deux vérins principaux identiques disposés parallèlement selon un même plan radial et orientés de façon symétrique par rapport à l'axe de l'arbre d'entraînement, de façon à créer de façon interne le couple de torsion appliqué entre lesdites première et deuxième parties de l'actionneur hydraulique.

Selon un mode particulier de réalisation, le dispositif d'étalonnage comprend des moyens de détermination de la pression dynamique $P_D$ du fluide hydraulique due à la rotation desdites canalisations tournantes, et des moyens de correction de la valeur de pression statique $P_S$ appliquée à l'actionneur hydraulique pour compenser, en fonction de la vitesse de rotation N de l'arbre d'entraînement, ladite pression dynamique $P_D$.

Toutefois, selon un mode de realisation préférentiel à compensation automatique des effets dynamiques, l'actionneur hydraulique comprend en outre deux vérins auxiliaires identiques disposés parallèlement dans un même plan radial et orientés de façon symétrique par rapport à l'axe de l'arbre d'entraînement; lesdits vérins auxiliaires étant disposés en opposition perpendiculairement auxdits vérins principaux et étant soumis à la seule pression dynamique $P_D$ du fluide hydraulique due à la rotation des canalisations tournantes de façon à compenser automatiquement le couple créé par les vérins principaux dû à ladite pression dynamique $P_D$, quelle que soit la vitesse de rotation N.

Selon une caractéristique particulière, les pistons des vérins principaux disposés dans les cylindres solidaires de ladite première partie sont appliqués sur ladite deuxième partie par l'intermédiaire de billes.

Conformément à un mode particulier de réalisation, le dispositif d'étalonnage comprend des premiers moyens de support équipés d'un roulement à billes pour supporter une première extrémité de l'arbre d'entraînement munie d'un orifice axial d'alimentation de l'actionneur hydraulique en fluide hydraulique, des seconds moyens de support équipés d'un roulement à rouleaux pour supporter une deuxième extrémité de l'arbre d'entraînement munie de moyens de liaison à des moyens d'entraînement en rotation, en ce que ledit arbre d'entraînement comprend un corps de grand diamètre situé à l'extérieur de l'arbre torsible, qui constitue ladite première partie de l'actionneur hydraulique et s'étend, dans un plan radial, sensiblement selon deux secteurs angulaires de 90° diamétralement opposés, en ce que ladite deuxième partie de l'actionneur hydraulique comprend deux branches disposées dans les espaces libres diamétralement opposés ménagés au voisinage dudit corps de grand diamètre, entre lesdits secteurs angulaires de 90°, et une partie de liaison en forme de manchon reliée à une extrémité de sortie de l'arbre torsible de couplemètre à étalonner, pour appliquer à celui-ci le couple interne créé par l'actionneur hydraulique, et en ce que l'arbre d'entraînement comprend au voisinage de sa deuxième extrémité , des moyens de liaison rigide avec l'entrée de l'arbre torsible pour entraîner celui-ci en rotation avec ledit arbre d'entraînement.

L'invention concerne encore un procédé pour l'étalonnage de couplemètres munis d'un arbre torsible creux et d'un capteur de torsion, caractérisé en ce qu'il comprend les étapes suivantes :

a) appliquer entre les deux extrémités de l'arbre torsible du couplemètre à étalonner, un couple C produit par un actionneur hydraulique alimenté en fluide hydraulique sous une pression statique contrôlée $P_S$,

b) entraîner en rotation à une vitesse V contrôlée ledit actionneur hydraulique et ledit arbre torsible creux, et

c) relever pour différentes vitesses de rotation N la courbe constituant l'étalonnage dudit couplemètre et comprenant les valeurs du signal de sortie $U_S$ dudit capteur de torsion du couplemètre à étalonner en fonction des valeurs de ladite pression statique $P_S$ qui sont proportionnelles aux valeurs du couple C produit par ledit actionneur hydraulique.

Le procédé et le dispositif selon l'invention sont particulièrement adaptés à des étalonnages de couplemètres compacts de faibles dimensions pour lesquels l'angle de torsion nominal est très faible, par exemple de l'ordre du degré ou du dixième de degré.

En effet, la précision de l'étalonnage ne dépend plus de cet angle $\gamma$ mais seulement de la mesure des deux paramètres que sont la tension de sortie Us du capteur de torsion et le couple interne appliqué à l'arbre de torsion, qui est proportionnel à la pression statique Ps. Le relevé de la courbe C = f (Us) peut aussi être facilement effectué pour toutes les vitesses d'utilisation, sans dissipation d'énergie significative.

Par ailleurs, le coût du dispositif d'étalonnage est réduit par rapport aux installations de l'art antérieur, tant au point de vue de sa réalisation que de celui de son exploitation dans une production en série.

L'invention concerne encore un couplemètre compact particulièrement adapté au dispositif d'étalonnage selon l'invention caractérisé en ce qu'il comprend un arbre torsible creux prévu pour être soumis à un couple de torsion C entre ses extrémités d'entrée et de sortie et un capteur de torsion mesurant le déphasage angulaire introduit sous l'effet d'un couple de torsion C entre les extrémités d'entrée et de sortie dudit arbre torsible, et en ce que le capteur de torsion comprend des premier et second circuits de rotor dentés identiques, en matériau ferromagnétique feuilleté, fixés au voisinage respectivement desdites extrémités d'entrée et de sortie, des premier et second circuits de stator dentés identiques, en matériau ferromagnétique feuilleté, disposés en regard respectivement desdits premier et second circuits de rotor dentés, une couronne circulaire centrale d'aimants statiques interposée entre lesdits premier et second circuits de stator, pour définir une machine de type homopolaire, des sondes à effet Hall disposées dans des cavités magnétiques ménagées dans les premier et second circuits de stator pour mesurer l'induction magnétique dans ces circuits, et des moyens de mesure des tensions délivrées par les sondes à effet Hall.

Par mesure directe de l'induction magnétique dans les circuits statoriques à l'aide de sondes à effet Hall, il est possible de réaliser un couplemètre de dimensions réduites aussi bien dans le sens axial que dans le sens radial.

Selon un mode particulier d'un tel couplemètre, les premier et second circuits de stator dentés comprennent quatre pôles fonctionnels munis de cavités magnétiques dans lesquelles sont logées les sondes à effet Hall et quatre pôles auxiliaires munis de moyens mécaniques de centrage.

A titre d'exemple de réalisation les premier et second circuits de rotor dentés peuvent comprendre un nombre de dents compris entre environ 20 et 40, tandis que les premier et second circuits de stator dentés peuvent comprendre trois dents par pôle fonctionnel.

D'autres caractéristiques et avantages de la présente invention seront mis en évidence dans la description suivante, donnée à titre d'exemple non limitatif, en référence aux dessins annexés, dans lesquels :

- la figure 1 représente une coupe axiale d'un dispositif d'étalonnage selon l'invention, selon la ligne I-I de la figure 2,

- la figure 2 représente une coupe selon la ligne II-II de la figure 1 et montre la strurture d'un actionneur hydraulique compensé mis en oeuvre dans le dispositif d'étalonnage selon l'invention,

- la figure 3 est une vue schématique en perspective avec coupe partielle du dispositif des figures 1 et 2, et

- la figure 4 est une vue plus détaillée, en coupe axiale, d'un couplemètre compact particulièrement adapté au dispositif d'étalonnage selon l'invention.

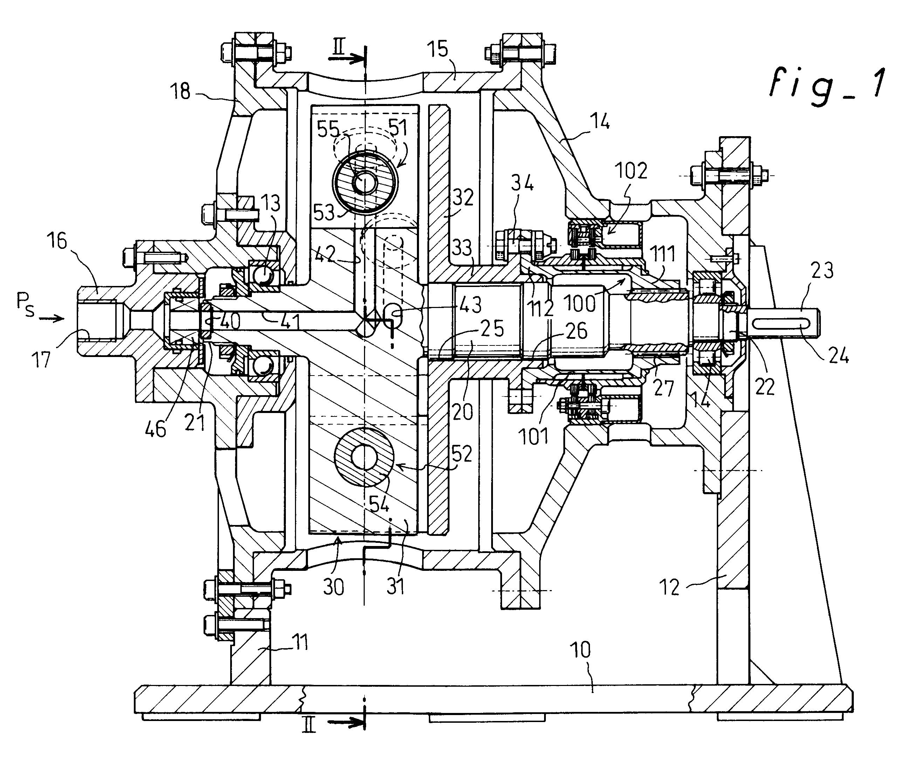

Si l'on considère tout d'abord la figure 1, on voit que le dispositif d'étalonnage selon l'invention comprend un bâti composé d'un socle 10, de montants 11,12, de flasques d'extrémité 18,14 fixés sur les montants 11,12 et d'une virole 15 elle-même rapportée sur les flasques d'extrémité 18,14.

Un arbre central d'entraînement 20 est supporté par ses deux extrémités 21,22 respectivement par un roulement à billes 13 et par un roulement à rouleaux 14 sur les flasques d'extrémité 18, 14 eux-mêmes supportés par les montants 11,12.

L'arbre central d'entraînement 20 est prolongé à son extrémité 22 par une portion 23 munie de clavettes 24 pour coopérer avec un moyen d'entraînement en rotation externe, tel qu'un moteur électrique, non représenté.

A son extrémité opposée 21, l'arbre principal 20 comporte un orifice 40 d'alimentation en fluide hydraulique à une pression statique contrôlée Ps. Un joint tournant 46, disposé en regard de l'orifice d'alimentation 40 dans un embout porte-joint 16 lui-même muni d'un ajutage 17, assure l'étanchéité au niveau de l'alimentation en fluide hydraulique sous une pression Ps qui peut être de l'ordre de plusieurs mégapascals.

On décrira maintenant de façon plus détaillée en référence aux figures 1 à 3 les caractéristiques essentielles du dispositif et du procédé d'étalonnage de couplemètres conformes à l'invention.

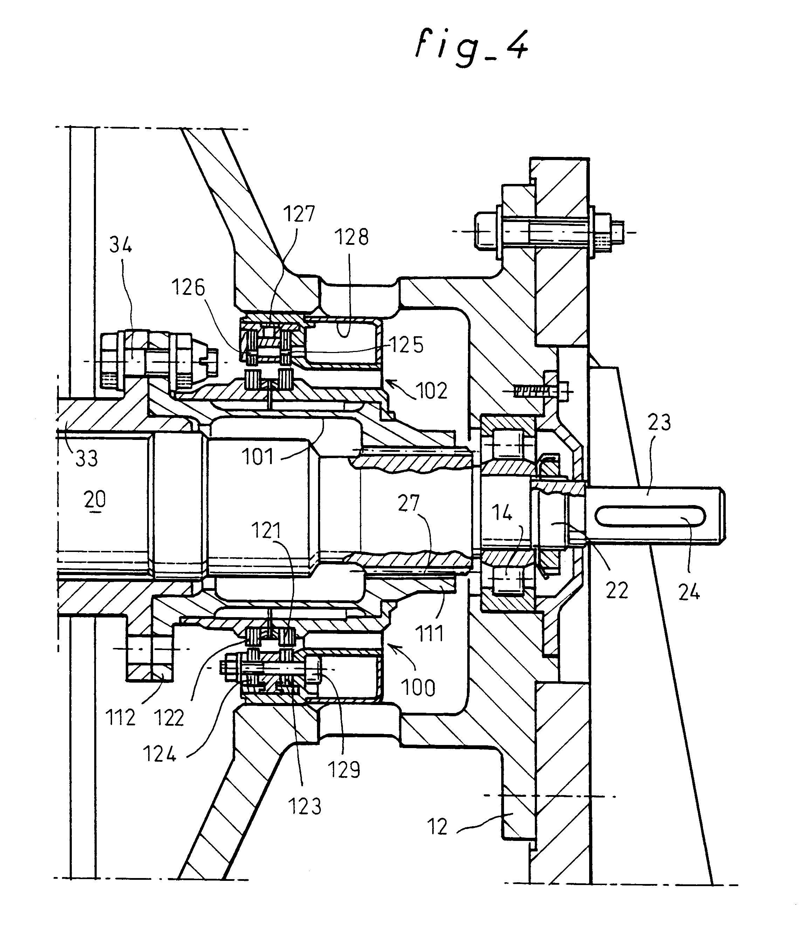

Le dispositif d'étalonnage est particulièrement adapté à l'étalonnage de couplemètres compacts 100, tels que ceux qui seront décrits plus loin en référence à la figure 4 et qui comportent d'une part un arbre torsible 101 creux et d'autre part un capteur de torsion 102 de type électromagnétique disposé autour de l'arbre torsible creux 101. Aussi, la description du dispositif d'étalonnage sera faite en référence à ce type de couplemètre.

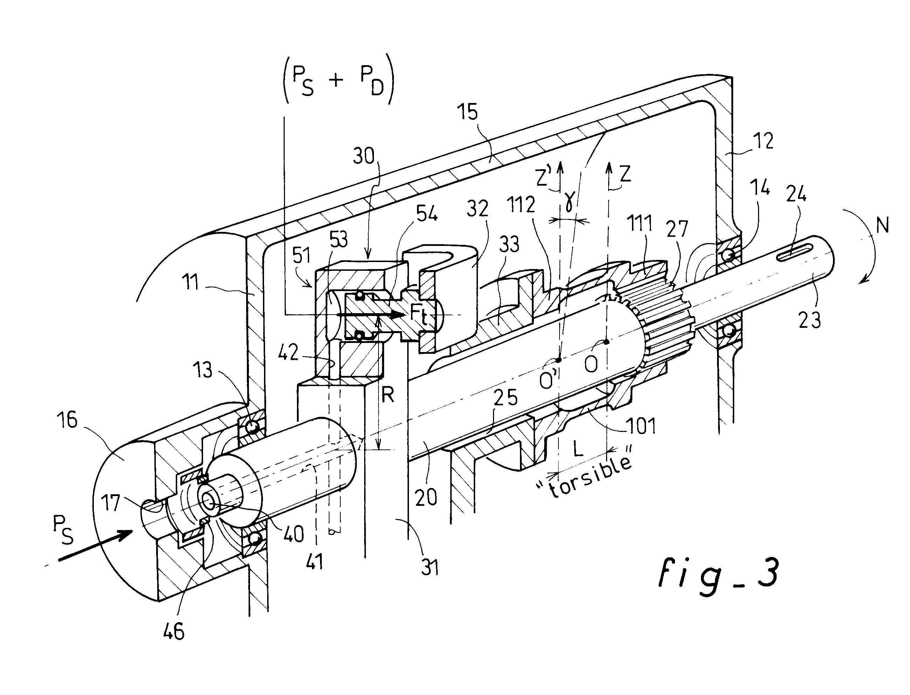

Comme on peut le voir sur les figures 1 et 3, l'arbre central d'entraînement 20 traverse de part en part l'arbre torsible creux 101 et se trouve relié rigidement à l'extrémité d'entrée 111 de cet arbre torsible par une liaison à clavettes 27, au voisinage du palier à rouleaux 14. Dans sa partie située entre le roulement à billes 13 situé près de l'orifice d'alimentation 40 en fluide hydraulique et l'arbre torsible 101, à l'extérieur de ce dernier, l'arbre central d'entrainement présente un corps 31 de grand diamètre qui coopère avec un deuxième élément 32 pour constituer un actionneur hydraulique 30 capable de créer un couple de façon interne, c'est à dire sans application d'un effort mécanique externe par l'arbre central 20, entre les première et deuxième extrémités 111, 112 de l'arbre torsible 101.

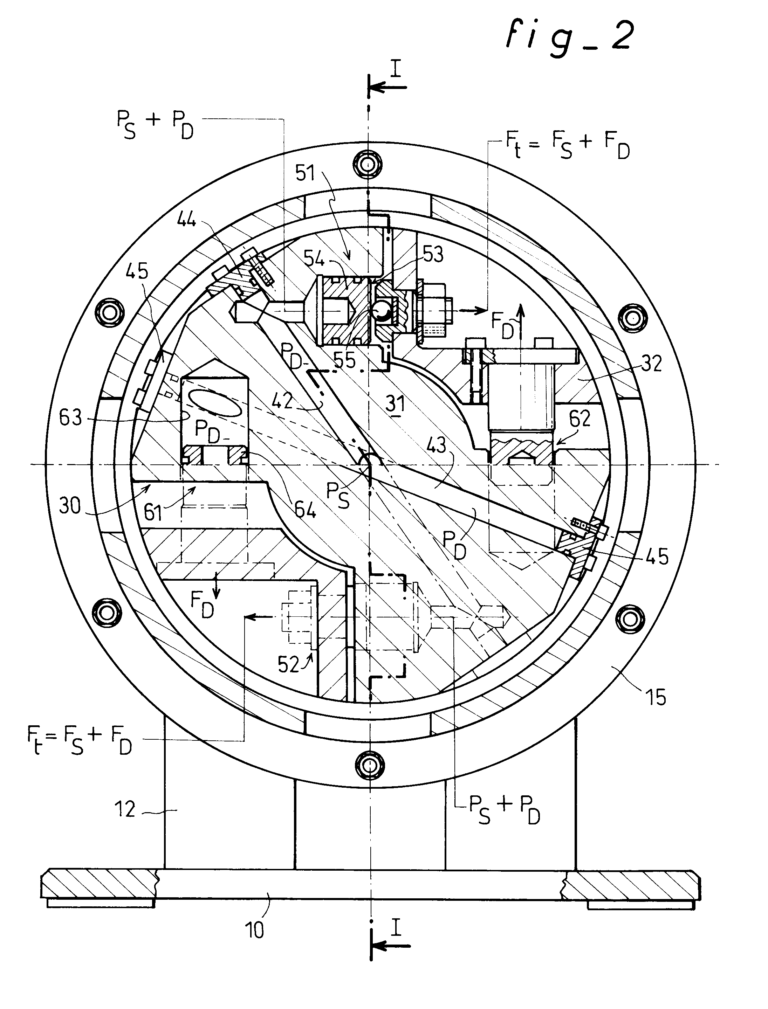

De façon plus particulière, l'actionneur hydraulique 30 comprend une première partie, constituée par le corps 31 précité, qui comprend au moins un cylindre 53 alimenté en fluide hydraulique sous pression par des canalisations 41, 42 à partir de l'orifice l'alimentation 40 relié à une source de fluide hydraulique à une pression statique réglable Ps. Le deuxième élément 32 constituant l'actionneur hydraulique 30 comprend au moins un piston 54 qui est engagé dans un cylindre 53 du corps 31 et, dans l'exemple de réalisation représenté sur les figures 1 et 2, coopère avec une bille 55 assurant la transmission d'une force sur l'élément 32 qui se prolonge par un manchon 33 disposé autour d'une partie de plus faible section de l'arbre central 20 et qui repose sur cette partie par exemple à l'aide de paliers lisses de centrage 25,26. L'extrémité du manchon 33 la plus éloignée du corps 31 est fixée sur l'extrémité de sortie 112 de l'arbre torsible 101 à l'aide de moyens de liaison 34 assurant une solidarisation en rotation. On comprend que, de la sorte, un couple de torsion créé par la pression statique Ps peut être appliqué à l'aide d'un vérin principal 51 incorporé dans l'actionneur hydraulique 30 à l'arbre torsible 101 du couplemètre 100.

Selon un mode de réalisation avantageux, l'actionneur hydraulique 30 comprend deux vérins principaux identiques 51, 52 disposés parallèlement selon un même plan radial et orientés de façon symétrique par rapport à l'axe de l'arbre d'entraînement 20. Ces ceux vérins 51, 52 qui présentent les mêmes caractéristiques, sont alimentés par la même pression d'entrée Ps et permettent l'application, entre les deux extrémités 111, 112 de l'arbre torsible 101, d'un couple interne contrôlé qui n'apparaît pas au niveau de l'extrémité d'entrée 23 de l'arbre principal 20. Il est ainsi possible d'utiliser un moteur externe de faible puissance, qui peut être entraîné à une vitesse de rotation N quelconque souhaitée et ne doit vaincre que les pertes d'énergie parasites dues notamment aux frottements.

On notera que le coefficient de proportionalité entre le couple interne appliqué par les vérins principaux 51,52 incorporés dans l'actionneur hydraulique tournant 30 et la pression d'alimentation statique Ps ne dépend que des dimensions géométriques du vérin.

En pratique, les vérins hydrauliques principaux 51,52 sont soumis à la somme de la pression statique Ps mesurée et de la pression dynamique $P_D$ due à la rotation des circuits tournants 41,42 d'alimentation en fluide hydraulique, de sorte qu'ils exercent une force totale Ft qui est égale à la somme des forces Fs et $F_D$ dues à la pression statique Ps et à la pression dynamique $P_D$.

La pression dynamique $P_D$ peut être calculée en fonction de la vitesse de rotation N et la pression Ps appliquée peut ainsi, pour chaque vitesse N, être adaptée pour tenir compte de l'existence de la pression dynamique $P_D$.

Selon un mode préférentiel de réalisation représenté sur les figures 1 et 2, on réalise une compensation automatique de l'influence de la pression dynamique $P_D$, quelle que soit la vitesse de rotation, ce qui conduit à un dispositif particulièrement souple de mise en oeuvre.

Selon ce mode de réalisation préférentiel, deux vérins auxiliaires identiques 61,62, sont disposés parallèlement dans un même plan radial et orientés de façon symétrique par rapport à l'axe de l'arbre d'entraînement 20, en étant disposés en opposition, perpendiculairement aux vérins principaux 51,52. Les pistons 64 des vérins auxiliaires 61,62 sont soumis à la seule pression dynamique $P_D$ due à la rotation de la canalisation tournante 43 et des cylindres 63 et exercent ainsi la seule force $F_D$ due à la pression dynamique $P_D$, en opposition à la force $F_D$ créée par les vérins principaux 51,52, de sorte qu'il se produit bien une compensation automatique.

Comme on peut le voir sur la figure 2, le corps 31 de l'actionneur hydraulique 30, qui fait partie de l'arbre central 20, s'étend dans un plan radial, sensiblement selon deux secteurs angulaires de 90° diamétralement opposés. La deuxième partie 32 de l'actionneur hydraulique 30 comprend elle-même deux branches disposées dans les espaces libres diamétralement opposés ménagés au voisinage du corps 31 de grand diamètre, entre les secteurs angulaires de 90°. Les deux branches de cette deuxième partie 32 sont raccordées par la portion de liaison 33 en forme de manchon qui est fixée sur l'extrémité de sortie 112 de l'arbre torsible 101 comme indiqué précédemment.

Dans l'actionneur hydraulique tournant 30, les canalisations internes 42, d'alimentation des cylindres 53 des vérins principaux 51,52 de même que les canalisations internes 43 d'alimentation des cylindres 63 des vérins auxiliaires 61,62 sont obturées à leurs extrémités par des bouchons 44, 45 respectivement (figure 2).

Le procédé d'étalonnage de couplemètres mettant en oeuvre la présente invention comporte les simples étapes suivantes :

a) appliquer entre les deux extrémités de l'arbre torsible du couplemètre à étalonner, un couple C produit par un actionneur hydraulique alimenté en fluide hydraulique sous une pression statique contrôlée $P_S$,

b) entraîner en rotation à une vitesse V contrôlée ledit actionneur hydraulique et ledit arbre torsible creux, et

c) relever pour différentes vitesses de rotation N la courbe constituant l'étalonnage dudit couplemètre et comprenant les valeurs du signal de sortie $U_S$ dudit capteur de torsion du couplemètre à étalonner en fonction des valeurs de ladite pression statique $P_S$ qui sont proportionnelles aux valeurs du couple C produit par ledit actionneur hydraulique.

On décrira maintenant en référence à la figure 4 un couplemètre compact, de faible encombrement dans les sens axial et radial, muni d'un arbre torsible creux 101 pouvant présenter de très faible déphasages angulaires, de l'ordre de 0,10 à 1 degré lorsqu'il est soumis à un couple de torsion C entre ses extrémités d'entrée 111 et de sortie 112.

Le couplemètre 100 est équipé d'un capteur de torsion 102, destiné à mesurer avec précision le déphasage angulaire introduit sous l'effet d'un couple de torsion C, entre les extrémités d'entrée 111 et de sortie 112 de l'arbre 101.

Le capteur de torsion 102 comprend des premier et second circuits de rotor dentés 121, 122 identiques,en matériau ferromagnétique feuilleté, fixés au voisinage respectivement desdites extrémités d'entrée 111 et de sortie 112, des premier et second circuits de stator dentés 123, 124 identiques, en matériau ferromagnétique feuilleté, disposés en regard respectivement desdits premier et second circuits de rotor dentés 121, 122, une couronne circulaire centrale d'aimants statiques 127 interposée entre lesdits premier et second circuits de stator 123, 124, pour définir une machine de type homopolaire, des sondes à effet Hall disposées dans des cavités magnétiques 125, 126 ménagées dans les premier et second circuits de stator 123, 124 pour mesurer l'induction magnétique dans ces circuits, et des moyens de mesure des tensions délivrées par les sondes à effet Hall.

A titre d'exemple, les circuits de rotor dentés 121, 122 peuvent comprendre un nombre de dents égal à 30.

Selon un exemple particulier de réalisation, les circuits de stator dentés 123, 124 comprennent quatre pôles fonctionnels avec par exemple chacun trois dents, et des cavités magnétiques 125, 126 sont ménagées dans ces pôles fonctionnels pour loger des sondes à effet Hall.

Quatre pôles auxiliaires sans rôle fonctionnel peuvent servir pour retenir des moyens de centrage 129 des circuits de stator 123, 124.

L'utilisation de sondes à effet Hall mesurant directement les flux magnétiques correspondants et non pas les dérivées de ces flux par rapport au temps comme cela serait le cas avec de simples bobines d'induction, permet d'utiliser le capteur 102 pour la mesure du couple à des vitesses extrèmement basses et même à l'arrêt, si le nombre de sondes à effet Hall est doublé.

Sur la figure 4 sur laquelle le couplemètre miniature 100 est vu en coupe axiale, pratiquement en grandeur nature, on remarque que le capteur de torsion 102 se présente sous la forme de deux demi-machines excitée par une couronnne circulaire centrale d'aimants statiques 127. Un boîtier électronique 128 contient les connexions des sondes à effet Hall, non représentées, des préamplificateurs et leur alimentation ainsi que certains circuits annexés d'exploitation des mesures, qui peuvent notamment comprendre l'enregistrement en mémoire des résultats d'étalonnages effectués à l'aide d'un dispositif tel que décrit en référence aux figures 1 à 3.

L'induction magnétique Bp dans les pôles principaux des circuits de stator dentés 123, 124 est proportionnelle à l'induction mesurée par les sondes à effet Hall logées dans les cavités de Maxwell correspondantes 125, 126. Cette induction est maximale lorsque les dents des circuits de rotor 121, 122 et les dents des circuits de stator se font face. Cette induction diminue lorsque les dents des circuits de rotor 121, 122 sont décalées par rapport à celles des circuits de stator 123, 124. La détermination des variations d'induction, obtenue à partir des tensions produites par les sondes à effet Hall permet ainsi de déduire un angle de décalage relatif entre les deux circuits de rotor sous l'action du couple transmis C, et lorsque le couplemètre est étalonné, d'en déduire ainsi la valeur du couple C.

On indiquera ci-dessous les principales considérations qui permettent de déterminer une valeur de couple C à partir des signaux délivrés par le capteur de mesure 102 :

Appelons u et v les tensions des sondes à effet Hall produites sur les axes directs et en quadrature de la première demi-machine 121, 123; u′, v′ les tensions correspondantes de la deuxième demi-machine 122, 124.

- $\gamma$ l'angle de décalage relatif entre les deux rotors 121 et 122 sous l'action du couple transmis C.

- $\Delta U$ la variation maximum théorique des tensions u et v au cours de la rotation.

- Umoy la tension moyenne de u ou v, c'est à dire umoy $= \dfrac{u + v}{2}$

- $\Delta u$ la différence de tension : u = u′- u = v - v′

- Uc la tension de crête de cette tension u.

- KBo la sensibilité à circuit ouvert des sondes à effet Hall.

- I1N le courant de contrôle nominal des sondes.

- BH l'induction traversant les sondes.

- $\lambda$ c le rapport entre l'induction BH et l'induction Bp moyenne du pôle.

- At$_\varepsilon$ les ampère-tours aux bornes des entrefers principaux

- Sp la section d'un pôle ( au niveau où règne l'induction Bp)

- $\overline{W}$d la perméance totale par dent, variable au cours de la rotation (le nombre de dents stator par pôle est par exemple égal à 3).

Dans ces conditions, on a :

u = k x $\overline{W}$d ($\overline{W}$d variant par exemple entre 4, 10 et 2,84 au cours de la rotation)

La valeur de k dans l'exemple considéré (en c.g.s) étant :

$$k = KBo \; x \; I_{1N} \; x \; \lambda \; c \; x \; 1{,}25 \; \frac{AT_\varepsilon}{Sp} \; x \; 3$$

Les valeurs de KBo peuvent être rendues identiques au niveau de toutes les sondes, par des circuits correcteurs au niveau de l'électronique. Les courants I$_{1N}$ de toutes les sondes sont identiques, les circuits de contrôle des sondes étant montés en série.

Les coefficents $\lambda$ c sont identiques pour toutes les sondes, ces coefficients ne dépendant que des dimensions géométriques des cavités de mesures. Il en est de même par les sections Sp.

Les ampère-tours At$_\varepsilon$ sont identiques pour toutes les dents, en l'absence de toute saturation. Tous les écarts géométriques résiduels (dispersion de fabrication, jeux de roulement) sont très fortement atténués par la structure générale de la machine (machine bipolaire, sommation simultanée sur trois dents différentes, mise en série de deux sondes opposées sur les axes u et v, identité du flux général traversant les deux demi-machines - système homopolaire - identité parfaite des flux de fuite d'aimant vis à vis des deux demi-machines grâce à une symétrie géométrique rigoureuse).

Il est donc possible de considérer que les coefficients k de toutes les sondes a effet Hall peuvent être rendus égaux avec une très grande précision.

Si l'on admet que $\Delta U = k' \times$ (u max - u min) avec $k \simeq 2,1$ (identique pour toutes les sondes) la relation u = k $\overline{W}$d conduit à l'expression :

$$\frac{\Delta U}{Umoy} = k' \frac{Umax - Umin}{Umoy} = k' \frac{\overline{W}d\,max - \overline{W}d\,min}{\overline{W}d\,moy} \simeq 0,44$$

Ce rapport ne dépend que de la géométrie des dents.

On a $\quad\dfrac{\Delta u\ max}{\Delta U} = \dfrac{\gamma\ °}{b\ °}\quad$ avec $Uc = \Delta u\ max$

et $b° =$ constante déterminée par la géométrie du capteur.

Donc

$$Uc = \Delta U \times \frac{\gamma°}{b°} \text{ et } \frac{Uc}{Umoy} = \frac{\Delta U}{Umoy} \times \frac{\gamma°}{b°} = 0,44 \frac{\gamma°}{b°}$$

La raideur de l'arbre de torsion rt est une constante

$$r_t = \frac{C\ mN}{\gamma°} = \text{constante}$$

On a donc

$$C = r_t \times \gamma° = r_t \times \frac{b°}{0,44} \times \frac{Uc}{umoy}$$

et donc

$$\boxed{C\ ^{mN} \simeq 5,9\ 10^4\ \frac{Uc}{Umoy}}\qquad \text{(pour l'exemple considéré)}$$

Le couple est proportionnel au rapport de la tension de crête Uc et de la tension moyenne égale elle-même à u+v/2. (Nous supposons ici évidemment que les étages de préamplification ont mêmes coefficients amplificateurs).

Ce rapport est indépendant de la vitesse (si la constante de temps des circuits RC est grande par rapport à la période des tensions u), et la tension U moyenne est elle même très sensiblement constante, ne dépendant pratiquement que de la température des aimants (ici, des aimants STAB/o, très stables en température). De toutes façons le rapport Uc/Umoy est indépendant de la température.

Par contre, la constante de la raideur rt n'est pas rigoureuse. Elle dépend de la précision d'usinage de l'arbre torsible (très fins), des variations du module de Young en fonction du taux de contrainte (c'est à dire du couple réellement appliqué), du matériau réel utilisé et de la température.

Le dispositif d'étalonnage selon l'invention permet de relever directement en rotation, pour toute vitesse, et sans dissipation d'énergie, la courbe du couple (en fonction du signal électrique de sortie Us/Umoy) du capteur de torsion 102.

Cette courbe d'étalonnage est propre à chaque couplemètre, et tient compte de l'ensemble des dispersions tant mécanique, qu'électriques ou électroniques de chaque appareil, hormis les variations de la raideur en fonction de la température de l'arbre torsible.

La mise en oeuvre d'un thermocouple permet cependant également de prendre en compte l'influence de la température.

## Revendications

1. Dispositif d'étalonnage de couplemètres (100) munis d'un arbre torsible creux (101) et d'un capteur de torsion (102), caractérisé en ce qu'il comprend un arbre d'entraînement (20) pénétrant à l'intérieur de l'arbre torsible creux (101) et en ce que l'arbre d'entraînement (20) est muni d'un actionneur hydraulique (30) dont une première partie (31) comprenant au moins un cylindre (53) est solidaire en rotation d'une première extrémité (111) de l'arbre torsible (101) et une deuxième partie (32) munie d'au moins un piston (54) est solidaire en rotation d'une deuxième extrémité (112) de l'arbre torsible (101).

2. Dispositif d'étalonnage selon la revendication 1, caractérisé en ce qu'il comprend des moyens de faible puissance d'entraînement en rotation, à une vitesse contrôlée N, de l'arbre d'entraînement (20) qui entraîne lui-même en rotation l'actionneur hydraulique (30) et l'arbre torsible creux (101), les moyens d'entraînement en rotation ne servant qu'à vaincre les pertes d'énergie parasites dues notamment aux frottements.

3. Dispositif d'étalonnage selon la revendication 2, caractérisé en ce qu'il comprend des moyens d'alimentation en fluide hydraulique, à une pression statique contrôlée $P_S$, de l'actionneur hydraulique, qui comprennent un orifice d'entrée (40) situé à une extrémité (21) de l'arbre d'entraînement (20),un joint tournant (46) disposé au voisinage dudit orifice d'entrée (40) pour assurer une étanchéité entre ledit orifice (40) et l'arbre d'entraînement (20), et des canalisations tournantes (41, 42) d'alimentation des cylindres (53) de l'actionneur hydraulique (30) ménagées dans ladite première partie (31).

4. Dispositif d'étalonnage selon l'une quelconque des revendications 1 à 3, caractérisé en ce que l'actionneur hydraulique (30) comprend deux vérins principaux identiques (51,52) disposés parallèlement selon un même plan radial et orientés de façon symétrique par rapport à l'axe de l'arbre d'entraînement (20), de façon à créer de façon interne le couple de torsion appliqué entre lesdites première et deuxième parties (31, 32) de l'actionneur hydraulique (30).

5. Dispositif d'étalonnage selon la revendication 3, caractérisé en ce qu'il comprend des moyens de détermination de la pression dynamique $P_D$ du fluide hydraulique due à la rotation desdites canalisations tournantes (41, 42), et des moyens de correction de la valeur de pression statique $P_S$ appliquée à l'actionneur hydraulique (30) pour compenser, en fonction de la vitesse de rotation N de l'arbre d'entraînement (20), ladite pression dynamique $P_D$.

6. Dispositif d'étalonnage selon la revendication 3 et la revendication 4, caractérisé en ce que l'actionneur hydraulique (30) comprend en outre deux vérins auxiliaires identiques (61, 62) disposés parallèlement dans un même plan radial et orientés de façon symétrique par rapport à l'axe de l'arbre d'entraînement (20); lesdits vérins auxiliaires (61, 62) étant disposés en opposition perpendiculairement auxdits vérins principaux (51, 52) et étant soumis à la seule pression dynamique $P_D$ du fluide hydraulique due à la rotation des canalisations tournantes (43) de façon à compenser automatiquement le couple créé par les vérins principaux (51, 52) dû à ladite pression dynamique $P_D$, quelle que soit la vitesse de rotation N.

7. Dispositif d'étalonnage selon l'une quelconque des revendications 4 et 6, caractérisé en ce que les pistons (54) des vérins principaux (51, 52) disposés dans les cylindres (53) solidaires de ladite première partie (31) sont appliqués sur ladite deuxième partie (32) par l'intermédiaire de billes (55).

8. Dispositif d'étalonnage selon l'une quelconque des revendications 1 à 7, caractérisé en ce qu'il comprend des premiers moyens de support (11) équipés d'un roulement à billes (13) pour supporter une première extrémité (21) de l'arbre d'entraînement (20) munie d'un orifice axial (40) d'alimentation de l'actionneur hydraulique (30) en fluide hydraulique, des seconds moyens de support (12) équipés d'un roulement à rouleaux (14) pour supporter une deuxième extrémité (22) de l'arbre d'entraînement (20) munie de moyens de liaison (23, 24) à des moyens d'entraînement en rotation, en ce que ledit arbre d'entraînement (20) comprend un corps (31) de grand diamètre situé à l'extérieur de l'arbre torsible (101), qui constitue ladite première partie (31) de l'actionneur hydraulique (30) et s'étend, dans un plan radial, sensiblement selon deux secteurs angulaires de 90° diamétralement opposés, en ce que ladite deuxième partie (32) de l'actionneur hydraulique (30) comprend deux branches disposées dans les espaces libres diamétralement opposés ménagés au voisinage dudit corps (31) de grand diamètre, entre lesdits secteurs angulaires de 90°, et une partie de liaison (33) en forme de manchon reliée à une extrémité de sortie (112) de l'arbre torsible (101) de couplemètre (100) à étalonner, pour appliquer à celui-ci le couple interne créé par l'actionneur hydraulique (30), et en ce que l'arbre d'entraînement (20) comprend au voisinage de sa deuxième extrémité (22), des moyens de liaison rigide (27) avec l'entrée (111) de l'arbre torsible (101) pour entraîner celui-ci en rotation avec ledit arbre d'entraînement (20).

9. Procédé pour l'étalonnage de couplemètres munis d'un arbre torsible creux (101) et d'un capteur de torsion (102), caractérisé en ce qu'il comprend les étapes suivantes :

a) appliquer entre les deux extrémités (111, 112) de l'arbre torsible (101) du couplemètre à étalonner, un couple C produit par un actionneur hydraulique (30) alimenté en fluide hydraulique sous une pression statique contrôlée $P_S$,

b) entraîner en rotation à une vitesse V contrôlée ledit actionneur hydraulique (30) et ledit arbre torsible creux (101), et

c) relever pour différentes vitesses de rotation N la courbe constituant l'étalonnage dudit couplemètre et comprenant les valeurs du signal de sortie $U_S$ dudit capteur de torsion (102) du couplemètre (100) à étalonner en fonction des valeurs de ladite pression statique PS qui sont proportionnelles aux valeurs du couple C produit par ledit actionneur hydraulique (30).

10. Couplemètre compact adapté au dispositif d'étalonnage selon l'une quelconque des revendications 1 à 8, caractérisé en ce qu'il comprend un arbre torsible creux (101) prévu pour être soumis à un couple de torsion C entre ses extrémités d'entrée (111) et de sortie (112) et un capteur de torsion (102) mesurant le déphasage angulaire introduit sous l'effet d'un couple de torsion C entre les extrémités d'entrée (111) et de sortie (112) dudit arbre torsible (101), et en ce que le capteur de torsion (102) comprend des premier et second circuits de rotor dentés (121, 122) identiques, en matériau ferromagnétique feuilleté, fixés au voisinage respectivement desdites extrémités d'entrée (111) et de sortie (112), des premier et second circuits de stator dentés (123, 124) identiques, en matériau ferromagnétique feuilleté, disposés en regard respectivement desdits premier et second circuits de rotor dentés (121, 122), une couronne circulaire centrale d'aimants statiques (127) interposée entre lesdits premier et second circuits de stator (123, 124), pour définir une machine de type homopolaire, des sondes à effet Hall disposées dans des cavités magnétiques (125, 126) ménagées dans les premier et second circuits de stator (123, 124) pour mesurer l'induction magnétique dans ces circuits, et des moyens de mesure des tensions délivrées par les sondes à effet Hall.

11. Couplemètre compact selon la revendication 10, caractérisé en ce que les premier et second circuits de stator dentés (123, 124) comprennent quatre pôles fonctionnels munis de cavités magnétiques (125, 126) dans lesquelles sont logées les sondes à effet Hall et quatre pôles auxiliaires munis de moyens mécaniques de centrage (129).

12. Couplemètre compact selon la revendication 10 ou la revendication 11, caractérisé en ce que les premier et second circuits de rotor dentés (121, 122) comprennent un nombre de dents compris entre environ 20 et 40.

13. Couplemètre compact selon la revendication 11 ou la revendication 12, caractérisé en ce que les premier et second circuits de stator dentés (123, 124) comprennent trois dents par pôle fonctionnel.

Fig _ 1

## fig _ 2

fig _ 3

fig_4

Office européen
des brevets

**RAPPORT DE RECHERCHE EUROPEENNE**

Numero de la demande

EP    92 40 1528

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | REVIEW OF SCIENTIFIC INSTRUMENTS. vol. 41, no. 6, Juin 1970, NEW YORK US pages 812 - 814; A.E. ABEY ET. AL.: 'DEVICE FOR DETERMINATION OF THE CHANGE IN CALIBRATION OF A TORSION LOAD CELL WHEN UNDER HYDROSTATIC PRESSURE' * le document en entier * --- | 1,9 | G01L25/00 |
| A | MEASUREMENT TECHNIQUES. vol. 21, no. 6, Juin 1978, NEW YORK US pages 798 - 799; P.N. ZAEV ET. AL.: 'RACK FOR CALIBRATING TORQUEMETERS' * le document en entier * --- | 1,9 | |
| A | DE-B-1 103 632 (VEB ENTWICKLUNGSBAU PIRNA) * le document en entier * --- | 1,9 | |
| A | EP-A-0 343 074 (TECHNOMESURE) * le document en entier * --- | 10 | |
| A | US-A-3 504 538 (S.A. ANDREWS ET. AL.) * le document en entier * ----- | 10 | **DOMAINES TECHNIQUES RECHERCHES (Int. Cl.5 )**<br><br>G01L |

Le présent rapport a été établi pour toutes les revendications

| Lieu de la recherche | Date d'achèvement de la recherche | Examinateur |
|---|---|---|
| LA HAYE | 31 AOUT 1992 | VAN ASSCHE P.O. |

EPO FORM 1503 03.82 (P0402)